Europäisches Patentamt

**European Patent Office**

Office européen des brevets

(19)

(11) Numéro de publication: **0 159 926**
**B1**

(12) **FASCICULE DE BREVET EUROPEEN**

(45) Date de publication du fascicule du brevet:
**24.06.87**

(51) Int. Cl.⁴: **B 60 N 1/06**

(21) Numéro de dépôt: **85400542.8**

(22) Date de dépôt: **21.03.85**

(54) **Articulations rondes utilisables pour les sièges de véhicules terrestres, nautiques et aériens.**

(30) Priorité: **18.04.84 FR 8406131**
**18.02.85 FR 8502308**

(43) Date de publication de la demande:
**30.10.85 Bulletin 85/44**

(45) Mention de la délivrance du brevet:
**24.06.87 Bulletin 87/26**

(84) Etats contractants désignés:
**AT BE CH DE FR GB IT LI LU NL SE**

(56) Documents cités:
**DE - C - 3 129 672**
**FR - A - 2 081 037**
**FR - A - 2 188 427**
**FR - A - 2 285 551**
**FR - A - 2 316 484**
**US - A - 4 382 630**

**Le dossier contient des informations techniques présentées postérieurement au dépôt de la demande et ne figurant pas dans le présent fascicule.**

(73) Titulaire: **A. & M. Cousin et Cie, Le Bois de Flers,**
**F-61103 Flers Cédex Orne (FR)**

(72) Inventeur: **Pipon, Yves, La Garenne St Georges des Groseilliers, F-61100 Flers (FR)**

(74) Mandataire: **Madeuf, Claude Alexandre Jean et al,**
**CABINET MADEUF 3, avenue Bugeaud, F-75116 Paris (FR)**

## Description

On connaît depuis fort longtemps des moyens de réaliser des articulations continues ou discontinues permettant, par des moyens simples, de régler la position du dossier d'un siège par rapport à l'assise de ce siège afin que l'occupant du siège soit dans une position aussi confortable que possible.

Ceci est très important lorsqu'il s'agit de sièges de véhicules terrestres, nautiques ou aériens afin de limiter la fatigue des personnes soit chargées de la conduite de ce véhicule, soit transportées par ce véhicule.

Pour l'invention, l'automobile constitue le domaine privilégié de ces articulations, car très souvent des véhicules comportent au moins un équipement complet, c'est-à-dire quatre articulations, deux pour chaque dossier des sièges avant de véhicule.

Dans les dernières années, et du fait, d'une part, de la structure générale des véhicules et, d'autre part, des nécessités d'économie d'énergie, on a été amené à créer des articulations de plus en plus petites en volume mais de plus en plus résistantes, car le siège devait être également le lieu de fixation des extrémités des ceintures de sécurité et en cas de choc l'armature du dossier devait, en se déformant, absorber une quantité assez grande d'énergie afin d'éviter aux passagers l'absorption brutale de cette énergie et donc, par conséquent, les blessures plus ou moins graves pouvant entraîner la mort.

Les articulations, connues jusqu'à présent, comportaient sur le côté fixe au moins un organe creux de forme allongée permettant de maintenir un des flasques de l'articulation sur la partie fixe du siège tandis que l'autre organe creux mobile présentait également une pièce allongée que l'on rendait solidaire de l'armature du dossier et après avoir inclus, à l'intérieur de ce volume creux, les organes nécessaires à la rotation lente du flasque mobile par rapport au flasque fixe, on était amené à verrouiller l'ensemble, d'une part, par la partie centrale à travers laquelle passait l'arbre de commande mais également, d'autre part, sur la périphérie de l'articulation et en général à trois ou quatre endroits répartis le long de la périphérie de l'articulation. Cette construction classique permettait d'obtenir une certaine résistance à l'arrachement du flasque mobile par rapport au flasque fixe dans la mesure où la position du dossier était pratiquement verticale mais, dès que ce dossier était beaucoup plus incliné, deux des pions de maintien de la périphérie des flasques se trouvaient distants d'un angle dépassant parfois 180°, d'où une diminution de la résistance à l'arrachement du flasque mobile par rapport au flasque fixe lors d'un effort latéral surtout.

Les articulations connues présentent également l'inconvénient grave, pour essayer de remédier dans la mesure du possible à ce manque de résistance, d'avoir leur partie terminale traitée, augmentant ainsi le prix de revient et rendant ainsi encore plus difficile la jonction de cette pièce traitée avec les armatures métalliques tubulaires ou en tôle conformée de l'assise ou du dossier à l'aide d'une soudure, car ce procédé de jonction entre des parties traitées et les aciers normaux n'a jamais été très satisfaisant.

Bien que l'on connaisse, par le FR-A-2 285 551, une articulation qui n'est pas ronde mais qui comporte un flasque mobile allongé et un flasque fixe allongé coopérant avec un satellite double présentant une denture intérieure et une denture extérieure, il doit être constaté que les organes de fixation des flasques fixes et mobiles sont rendus solidaires des armatures correspondantes de l'assise et du dossier du siège par l'emploi classique des soudures dont on a indiqué les inconvénients ci-dessus.

Les nouvelles études de réalisation de véhicules modernes, tendant évidemment à utiliser des produits nouveaux (matières plastiques, alliages légers) afin d'obtenir des ensembles cohérents permettant, par leur légèreté, l'emploi de moteurs de faible puissance et de faible consommation mais également de grande résistance aussi bien à l'usure qu'au choc, ont entraîné des études pour tous les organes futurs et en particulier pour les articulations des dossiers de sièges, et c'est pourquoi la présente invention tend à remédier à toutes les difficultés mentionnées ci-dessus en créant une articulation compacte, légère et de ce fait pratiquement indestructible, et qui comprend des moyens facilitant la liaison de cette articulation avec les armatures des assises et des dossiers en diminuant ainsi le prix de revient des installations.

On peut également, par une variante de l'invention, créer un mécanisme d'articulation totalement réversible permettant d'obtenir un blocage aisé même par commande manuelle ne nécessitant ainsi l'emploi que d'une seule fabrication utilisable soit par commande moteur, soit par commande manuelle, d'où un prix de revient encore plus avantageux.

Par rapport au brevet FR-A-2 285 551 qui décrit déjà une articulation ronde utilisable pour les sièges de véhicules comprenant un flasque mobile cylindrique portant des organes de fixation permettant l'accrochage aisé de l'armature du dossier et un flasque cylindrique fixe comportant également des organes de fixation permettant l'accrochage aisé de l'armature de l'assise du siège sur l'articulation, le flasque mobile et le flasque fixe contenant en leur centre chacun une ouverture, l'ouverture du flasque fixe recevant une pièce majeure portant une came sur laquelle est monté un satellite double ayant une denture intérieure et une denture extérieure, l'invention est caractérisée en ce que:

a) les dentures intérieure et extérieure du satellite double coopèrent l'une avec la denture extérieure du flasque fixe et l'autre avec la denture extérieure du flasque mobile;

b) une découpe circulaire du flasque fixe formant bossage circulaire sert à la fois de chemin de centrage au satellite double et à une bague ovoïde;

c) un roulement à billes est interposé entre le flasque mobile et une couronne sertie entre le flasque mobile et le flasque fixe;

d) des roulements à billes sont interposés entre le bossage circulaire, la bague centrale ovoïde et un roulement à aiguilles servant d'organe de repos au satellite double par rapport à la came;

e) la pièce majeure centrale comporte en son centre un évidement de forme circulaire constituant un palier lisse destiné à recevoir l'arbre de l'organe de commande du mécanisme des articulations du siège considéré.

Suivant une autre caractéristique de l'invention, la bague ovoïde est disposée entre le flasque fixe et le satellite double avec interposition entre le flasque mobile et la périphérie extérieure du satellite double de roulement à billes.

Suivant une autre forme de réalisation dans laquelle l'articulation utilisable pour les sièges de véhicules comprenant un flasque mobile cylindrique présentant un évidement et un flasque cylindrique fixe présentant également un évidement central constituant un espace avec l'évidement pour contenir un satellite double dont les dentures coopèrent l'une avec la denture externe du flasque mobile et l'autre avec la denture interne du flasque fixe, ces flasques mobile et fixe comportant des organes de fixation permettant l'accrochage aisé de l'armature de l'assise du siège et de l'armature du dossier, l'invention est caractérisée en ce que:

a) le flasque mobile présente un dégagement circulaire contenant un roulement à billes logé dans une couronne maintenant la périphérie extérieure du flasque fixe;

b) le satellite repose sur une couronne excentrée et sur une pièce circulaire maintenue par des roulements à billes puis la couronne excentrée comporte deux logements disposés à 120° l'un de l'autre pour obtenir des grains venant porter sur la face interne du satellite lorsque l'axe central de l'articulation est en position normale du fait que cet axe présente une collerette tronconique repoussant les grains contre la face interne du satellite pour bloquer ce dernier.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation diamétrale, en coupe, d'une première forme de réalisation de l'articulation.

La fig. 2 est une coupe suivant la ligne II-II de la fig. 1.

La fig. 3 est une coupe longitudinale d'une deuxième forme de réalisation de l'articulation.

La fig. 4 est une coupe suivant la ligne IV-IV de la fig. 3.

La fig. 5 montre une variante de réalisation de l'articulation à l'aide de galets.

La fig. 6 est également une variante de réalisation utilisant des billes extérieures.

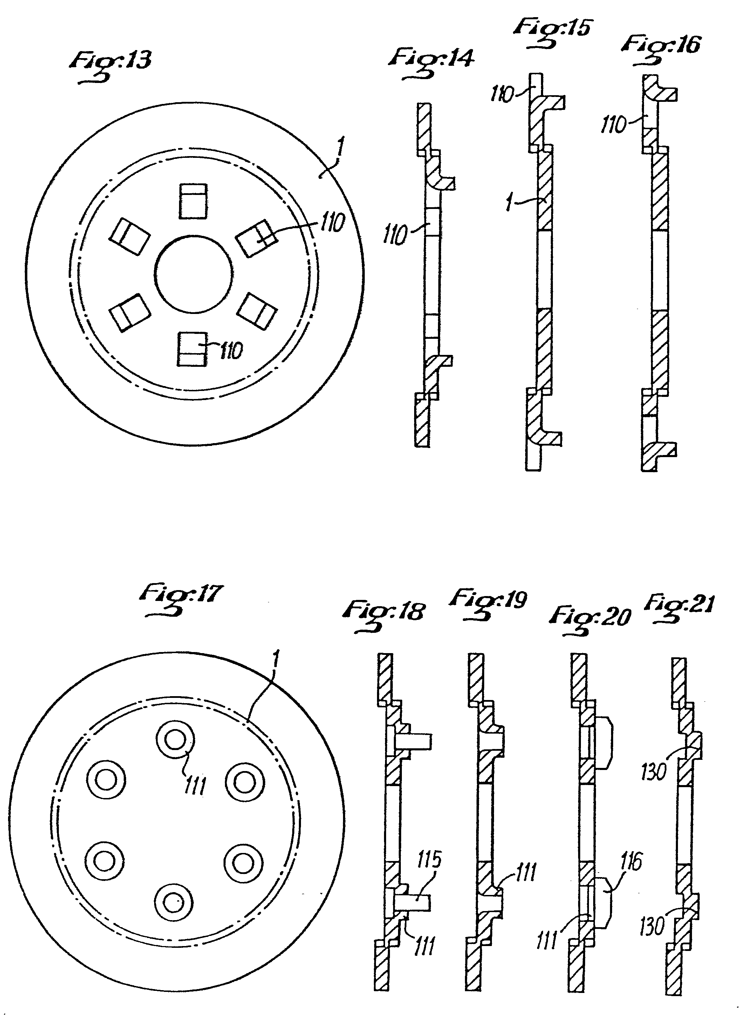

Les fig. 7, 8, 9, 10, 11, 12 montrent, en coupe-élévation, la réalisation de paliers qui sont des paliers lisses (fig. 7), des paliers lisses avec interposition d'aiguilles entre la came et le satellite (fig. 8), un seul palier lisse et des cages à aiguilles entre la came, le satellite et le flasque fixe (fig. 9), une légère modification de forme de la fig. 9 du fait que le flasque mobile ne comporte pas de centrage lisse (fig. 10), la came montée sur un palier lisse avec des billes interposées entre la came, le satellite et le flasque fixe (fig. 11), la came supportée sur les flasques fixe et mobile par des cages à aiguilles (fig. 12) ainsi que le satellite.

Les fig. 13, 14, 15, 16 montrent le flasque mobile soit en élévation de face, soit en coupe diamétrale avec des crevés de formes diverses permettant la jonction de ces flasques mobiles avec l'armature du dossier et du siège.

La fig. 17 montre, en élévation de face, une variante du flasque mobile ainsi que les coupes diamétrales (fig. 18, 19, 20, 21) permettant la liaison sur le flasque mobile de l'organe de jonction avec l'armature soit au moyen de rivets, de vis, de pattes diverses ou autres moyens analogues.

La fig. 22 est une vue de face d'une autre variante du mécanisme d'articulation.

La fig. 23 est une coupe diamétrale suivant la ligne XXIII-XXIII de la fig. 22.

La fig. 24 est une coupe suivant la ligne XXIV-XXIV de la fig. 23.

La fig. 25 est une coupe suivant la ligne XXV-XXV de la fig. 23.

La fig. 26 est une élévation, partie en coupe, d'un organe de débrayage à verrous de positionnement utilisé pour les sièges de véhicules à deux portes.

La fig. 27 est une coupe suivant la ligne XXVII-XXVII de la fig. 26.

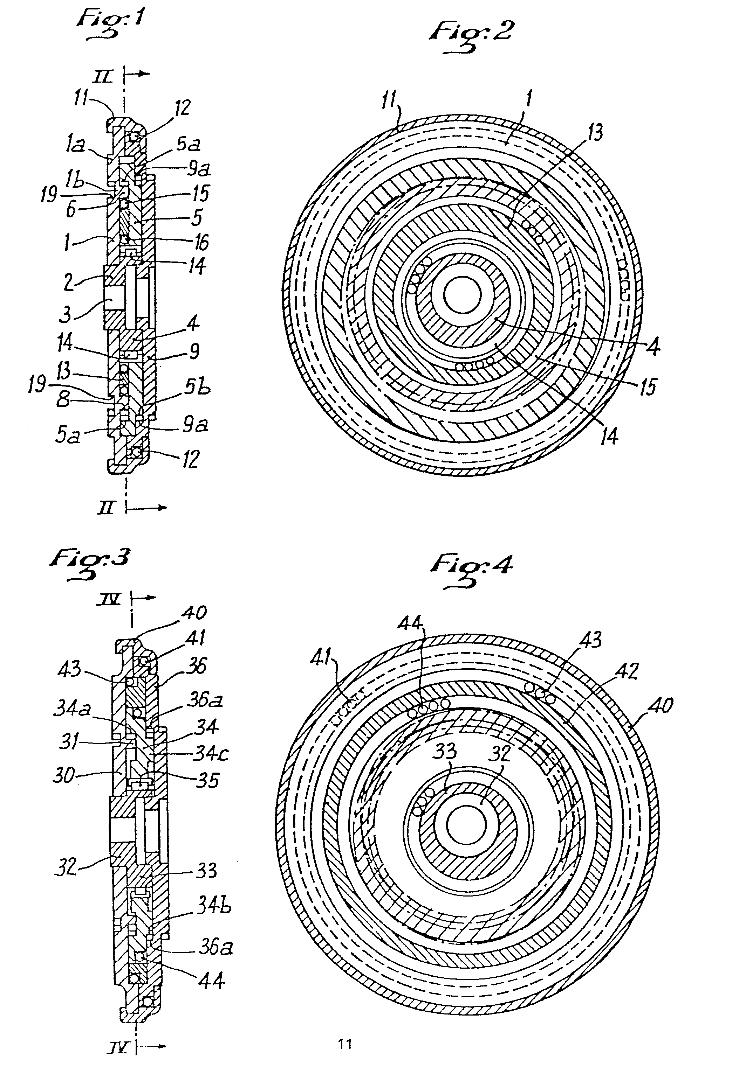

Lorsque l'on examine les fig. 1 et 2, on s'aperçoit que l'articulation affecte la forme d'un organe cylindrique composé essentiellement d'un flasque fixe 1 centré sur une pièce majeure 2 constituant, d'une part, un palier 3 de l'arbre de commande de l'articulation et, d'autre part, la came 4 donnant le mouvement au satellite double 5. Le flasque fixe 1 comporte principalement dans sa zone médiane deux découpes 1a, 1b de façon à constituer un bossage circulaire 6 qui sert de moyeu de centrage et de réaction au satellite double 5 qui comporte une denture intérieure 5a coopérant avec la denture 8 portée par le flasque fixe 1. L'autre partie du satellite double 5 présente une denture extérieure 5b coopérant avec une denture intérieure 9a du flasque mobile 9. La denture intérieure 9a du flasque mobile 9 est taillée sur un décrochement circulaire du flasque mobile 9 qui présente un deuxième décrochement extérieur servant à la mise en place d'une couronne 11 enserrant la partie périphérique extérieure du flasque fixe 1 et la découpe terminale extérieure du flasque mobile 9.

Comme on peut le voir à la fig. 1, des billes 12 sont disposées entre la couronne 11 et la partie supérieure périphérique du flasque mobile 9 puis une bague centrale ovoïde 13 est placée entre le bossage circulaire 6 du flasque fixe 1 et une cage à aiguilles 14 centrés sur la périphérie extérieure de la came 4 étant entendu qu'entre le bossage 6, la bague centrale ovoïde 3 et le roulement à aiguilles 14 sont disposés des roulements à billes 15, 16.

Comme on peut s'en rendre compte, les dentures opposées sur le satellite double 5 font déjà que le jeu entre les dents du satellite double et les dents en couronne portées par le flasque mobile 9 et le flasque fixe 1 est limité au strict minimum sinon complètement supprimé puisque systématiquement les dents mâles d'un élément pénètrent dans les dents femelles d'un autre élément et ce dans une position diamétralement opposée. De plus, la mise en place de la cage à aiguilles 14, des roulements à billes 15, 16 et du roulement à billes 12 situe parfaitement les différentes pièces les unes par rapport aux autres donnant ainsi au mécanisme d'articulation une compacité et une résistance parfaites. La couronne 11, maintenant, d'une manière continue et circulaire, les organes de l'articulation entre les flasques mobile 9 et fixe 1, augmente considérablement la résistance de ce mécanisme d'articulation, les flasques pouvant être reliés, comme cela sera expliqué plus loin, soit directement, soit par l'intermédiaire de pièces supplémentaires, aux armatures de l'assise et du dossier du siège considéré.

A la fig. 3, le flasque fixe 30 qui comporte un redent circulaire 31, muni d'une denture extérieure, est centré sur la pièce majeure 32 qui porte la came 33. Le satellite double 34 est monté sur la came 33 par l'intermédiaire d'une cage à aiguilles 35. La denture du redent circulaire 31 étant dirigée vers l'extérieur, la denture coopérant 34a du satellite double 34 est dirigée vers l'intérieur. En ce qui concerne la deuxième denture 34b du satellite double 34, celle-ci est portée par un redent circulaire 34c et est dirigée vers l'extérieur. Finalement, le flasque mobile 36 comporte une découpe circulaire 36a sur laquelle est découpée une denture dirigée vers l'intérieur et coopérant avec la denture 34b du satellite double 34. On remarque tout de suite que le flasque fixe 36 est relié au flasque fixe 30 par une couronne circulaire continue 40 comme dans le cas des fig. 1 et 2 avec interposition, entre le flasque mobile 36 et la couronne 40, d'un roulement à billes 41.

Finalement, une bague légèrement ovoïde 42 est interposée entre le flasque mobile 36 et la périphérie extérieure du satellite double 34 avec mise en place des roulements à billes 43-44. Comme dans le cas précédent, le volume délimité par les flasques mobile et fixe est complètement rempli par la came 33, le satellite double 34, la bague ovoïde 42 et les différents roulements à billes et à aiguilles 41, 43, 44 et 45. De plus, l'inversion des dentures avec un contact diamétralement opposé, comme expliqué ci-dessus, permet d'obtenir un mécanisme d'articulation homogène pratiquement sans jeu entre les dentures. On obtient ainsi un mécanisme d'articulation totalement réversible puisqu'il est muni des roulements à billes et à aiguilles sus-décrits, mais ce mécanisme peut devenir un mécanisme d'articulation irréversible lorsque l'on supprime ces roulements à billes ou à aiguilles et que les différents organes de ce mécanisme reposent sur des paliers lisses.

Ceci permet donc d'avoir des mécanismes purement manuels irréversibles ou au contraire des mécanismes totalement réversibles, ces derniers pouvant donc être commandés à partir d'un groupe moteur électrique ou autre avec si nécessaire un blocage manuel sur une partie du mécanisme de l'articulation, par exemple entre le flasque 1 et la pièce 2 ou entre le flasque fixe 30 et la pièce majeure 32.

Lorsque l'on examine la fig. 5, on s'aperçoit que l'on peut très aisément remplacer les roulements à billes par des roulements à aiguilles ou à rouleaux 45 entre le flasque mobile 9 et la couronne 11.

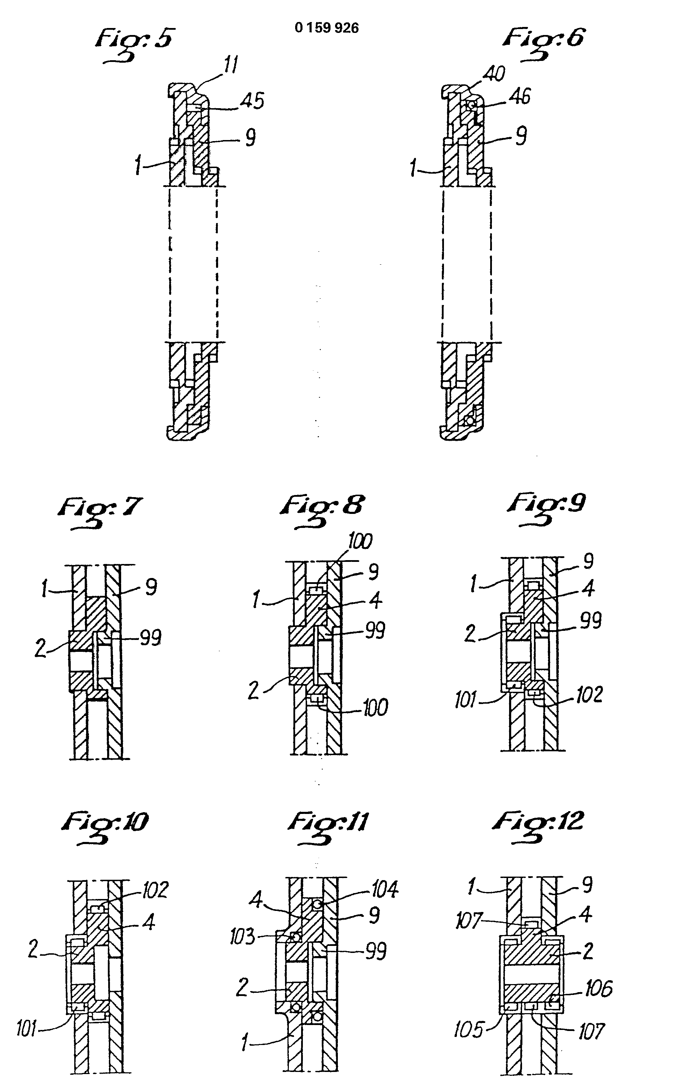

A la fig. 6, la construction est identique mais on se trouve en présence d'un roulement à billes extérieur 46.

A la fig. 7, la pièce majeure 2 est montée de façon à utiliser des paliers lisses donc de créer un mécanisme irréversible du fait que la pièce majeure 2 repose sur une découpe 99 prévue sur le flasque mobile 9.

A la fig. 8, le montage est identique à celui de la fig. 7 mais la came 4 porte un roulement à aiguilles 100.

Dans ce cas le mécanisme est irréversible.

A la fig. 9, le montage des pièces est fait exclusivement sur des roulements à rouleaux 101, 102 comme à la fig. 10 mais, sur cette figure, la découpe 99 est supprimée.

A la fig. 11, on met en place des roulements à billes 103, 104 entre le flasque fixe 1, la pièce majeure 2 et la came 4 supportant le satellite non représenté 5.

Finalement, à la fig. 12, la pièce majeure 2 est double et porte en son centre la came 4. La pièce majeure repose dans des roulements à aiguilles 105, 106 et le satellite double sur un roulement à rouleaux 107.

A la fig. 13, on a montré de face le flasque extérieur fixe 1 qui présente dans sa zone centrale des crevés 110 pouvant avoir les formes diverses représentées aux fig. 14, 15 et 16. Ces crevés servent à la liaison aisée du mécanisme avec les armatures du dossier.

A la fig. 17, le flasque fixe 1 présente des ouvertures 111 à travers lesquelles peuvent être placés des rivets 115, des crampons 116 ou d'autres organes comme cela est représenté aux fig. 18, 19 et 20 ou, même comme cela est représenté à la fig. 21, des découpes circulaires 130 de façon à assurer la liaison rapide, aisée et peu coûteuse des pièces de l'armature du dossier sur le mécanisme d'articulation étant entendu que le même système est adapté (fig. 13 à 21) pour le flasque fixe afin de maintenir ce dernier sur l'armature de l'assise du siège.

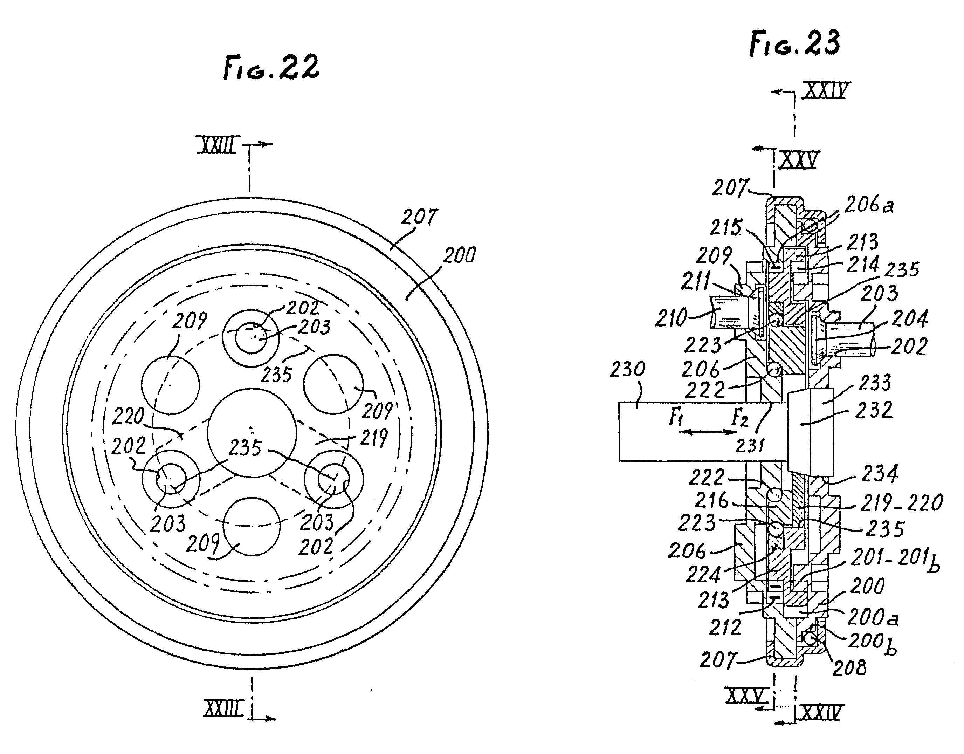

Comme on peut le voir aux fig. 22 et 23, le mécanisme d'articulation se compose d'un flasque mobile 200 comprenant sur sa face intérieure dans un évidement circulaire 200a une denture 201 et, disposés à 120°, trois trous 202 dans lesquels sont logées des tiges 203 à têtes 204 pour la fixation du flasque mobile 200 sur l'armature du dossier d'un siège.

Un flasque fixe 206 est accolé au flasque mobile 200 et les deux pièces sont réunies par une couronne 207 qui peut être sertie.

Un roulement à billes 208 est interposé entre la périphérie 200b du flasque mobile 200 et la couronne 207 pour permettre ainsi d'une manière aisée la rotation du flasque fixe 206 par rapport au flasque mobile 200.

Comme cela est visible à la fig. 23, le flasque fixe 206 comporte, disposés à 120° les uns des autres, des bossages 209 portant des tiges 210 à têtes 211 pour fixer le flasque fixe 206 sur l'armature de l'assise du siège.

Le flasque fixe 206 présente dans un évidement central 206a une denture interne 212.

Il est à remarquer que la denture 201 du flasque mobile 200 est placée sur la partie inférieure de l'évidement 200a tandis que la denture interne 212 du flasque fixe 206 est placée sur l'extérieur de l'évidement 206a.

Les évidements 200a du flasque mobile 200 et 206a du flasque fixe 206 permettent, comme le montre la fig. 23, la mise en place d'un satellite 213 comportant une denture 214 tournée vers la denture 201 du flasque mobile 200 et une autre denture 215 tournée vers la denture 212 du flasque fixe 206, puis on trouve entre les deux flasques mobile 200 et fixe 206 une couronne excentrée 216 présentant sur sa face avant tournée vers le flasque mobile 200 des logements 217, 218 disposés à 120° l'un de l'autre et contenant des grains 219, 220. Pour maintenir la couronne 216 dans sa position excentrée se trouvent un roulement à billes central 222 et un deuxième roulement à billes 223 prenant appui à sa périphérie extérieure contre une pièce circulaire 224 logée sous la partie extérieure du satellite 213. Le roulement à billes central 222 repose lui-même contre la face interne centrale du flasque fixe 206 dans l'évidement 206a.

Finalement et comme représenté au dessin, un axe 230 traverse le trou 231 percé au centre du flasque fixe 206, cet axe étant prolongé par une collerette 232 solidaire de l'axe 230 et ayant en section une forme tronconique. La collerette 232 est prolongée par une tête cylindrique 233 pénétrant dans un trou central 234 percé dans le flasque mobile 200.

Normalement, l'axe 230 est maintenu dans la position représentée à la fig. 23 par un ressort tendant à tirer cet axe 230 dans le sens de la flèche $F_1$ (fig. 23). Ce ressort peut être fixé, par exemple, entre un point fixe solidaire de l'armature de l'assise du siège et un point quelconque de l'axe 230.

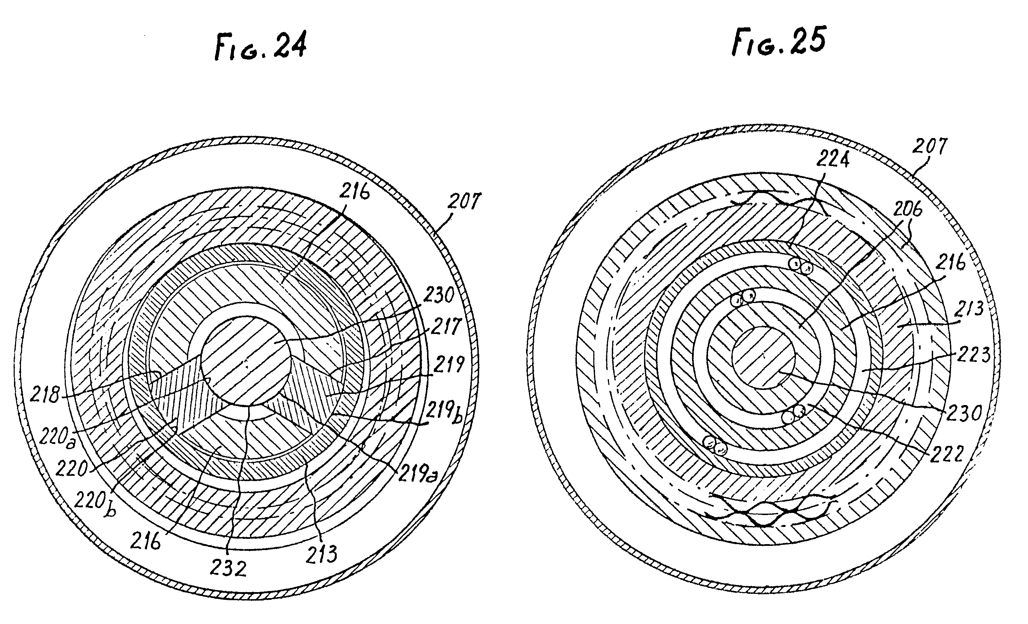

Lorsque les organes occupent la position représentée aux fig. 23, 24, 25, les grains 219, 220 en prenant appui par leurs bords inférieurs 219a, 220a sur la partie tronconique constituée par la collerette 233 maintiennent fermement la zone évidée centrale du satellite 213 en l'empêchant de tourner, ce qui provoque du fait des dentures 201, 214, 215 et 212 le blocage des trois pièces flasque mobile 200, satellite 213 et flasque fixe 206.

Dans le cas où l'on repousse dans le sens de la flèche $F_2$ (fig. 23) l'axe 230, on dégage la collerette 232, les grains 219, 220 sont libres et, à partir de là, on peut aisément, du fait de la présence des roulements à billes 208, 222, 223, faire tourner le flasque mobile 200 dans la couronne 207 par rapport au flasque fixe 206 et ainsi obtenir un déplacement angulaire du dossier par rapport à l'assise du siège considéré.

L'articulation étant réversible, il suffit d'une légère poussée sur le dossier pour régler celui-ci en inclinaison arrière et dans le cas où l'on veut redresser le dossier, le ressort de rappel classique agit dans le sens inverse en ramenant le dossier contre le dos de l'occupant du siège. Dès que l'effort dans le sens de la flèche $F_2$ cesse, le ressort de rappel ramène l'axe 230 dans le sens de la flèche $F_1$ et l'articulation est bloquée immédiatement par l'intermédiaire des grains 219, 220.

On se trouve donc en présence d'une articulation très simple ayant la possibilité de régler la position d'un dossier en passant pratiquement de la verticale jusqu'à l'horizontale sans aucune limite puisque le dossier peut être bloqué à tout instant juste dans la position choisie par l'utilisateur, d'où la nécessité d'un réglage angulaire extrêmement fin appelé couramment dans la technique «réglage 0°» à l'aide de cette articulation continue.

Ceci est obtenu du fait de la poussée des grains 219-220 provoquée par la collerette 232 tronconique de l'axe de commande 230, qui agissent sur la partie lisse 235 interne du satellite et qui ainsi bloquent le mécanisme. Il faut également ajouter que du fait de cette poussée il y a réaction, d'une part, sur les parties lisses 231-233 de l'axe 230 avec les alésages correspondants réalisés sur les flasques mobile 200 et fixe 206, et d'autre part, par la poussée des grains 219-220, sur la denture en opposition à l'excentration maximale de la couronne excentrée 216. Dans le cas d'utilisation d'une denture de positionnement pratiquée sur la face de blocage des grains 219-220, il est également pratiqué sur la partie interne 235 du satellite 213 une série de dents correspondant à celles des grains sur la périphérie de l'alésage.

Comme indiqué ci-dessus, il suffit d'un très faible effort pour faire tourner le satellite et donc très peu de pression pour le freiner, freinage obtenu par les grains 219-220.

De plus, cette articulation comporte un satellite 213 de fabrication simple avec une même denture intérieure et extérieure 214, 215. En général, le satellite est obtenu par semi-découpe, ce qui permet d'obtenir une pièce à haute résistance.

Bien que la face extérieure 219b, 220b des grains 219, 220 soit représentée lisse, elle peut être également dentée, le pourtour interne du satellite 213 étant alors denté également.

Chaque siège est normalement équipé de deux articulations conformes à celles décrites ci-dessus, l'une à droite et l'autre à gauche et, dans ce cas, la commande de coulissement des axes 230 peut être réalisée soit manuellement au moyen d'une commande centrale sous le siège, soit à l'aide d'un organe électrique tel qu'un électro-aimant également placé sous le siège. Dans le cas où il n'existe qu'une seule articulation par siège, l'autre côté du siège est équipé d'un simple dispositif de verrouillage débrayable au moment de la manœuvre et permettant le réglage du dossier par rapport à l'assise du siège considéré.

Il est bien connu que, dans les véhicules à deux portes, il est absolument nécessaire de rabattre le dossier sur l'assise pour permettre aux passagers des places arrière soit de rentrer soit de sortir du véhicule. Mais les articulations décrites dans ce qui précède ne permettent pas ce rabattement du dossier sur l'assise car on serait amené alors à dérégler complètement le dossier, ce qui serait beaucoup trop long, surtout dans le cas d'un accident, pour permettre la sortie rapide du ou des passagers arrière.

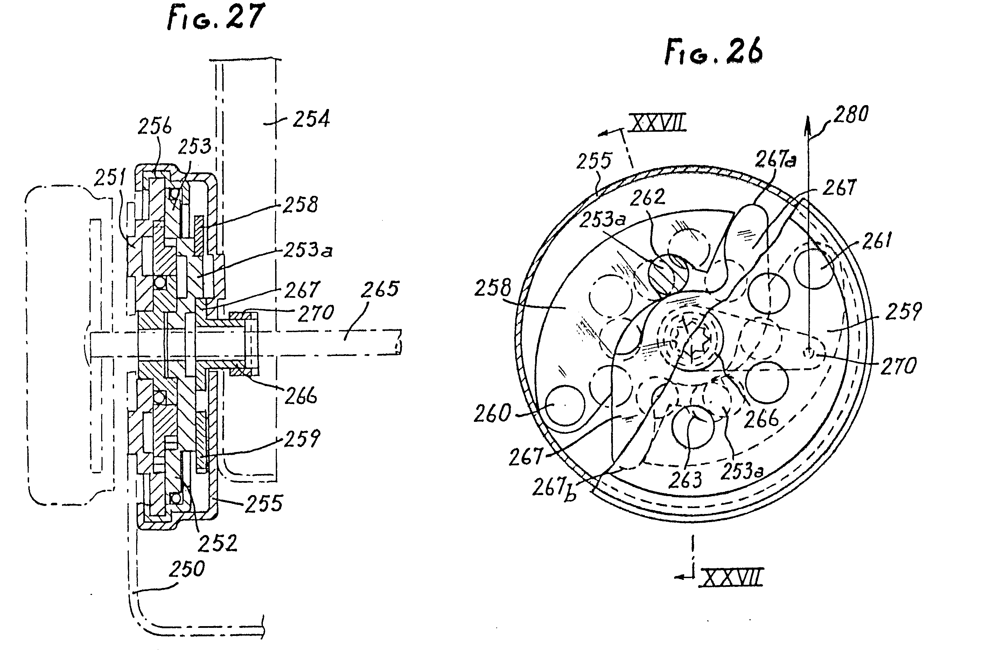

Les fig. 26 et 27 donnent donc une solution pour ces articulations en prévoyant que, si le flasque fixe 251 est toujours fixé comme décrit ci-dessus sur l'armature 250 de l'assise, l'articulation, désignée par 252, qui peut être d'un type quelconque mais qui est circulaire, présente un flasque mobile 253 qui est fixé sur l'armature 254 du dossier par l'intermédiaire d'une coupelle 255 montée rotative sur la couronne 256 qui correspond à la couronne 40 ou à la couronne 207.

La jonction du flasque mobile 253 avec la couronne 256 se fait par l'intermédiaire de deux verrous 258-259 articulés sur des axes 260-261 solidaires de la couronne 256. Les verrous 258, 259 comportent diamétralement opposés deux alvéoles 262-263 qui normalement reposent sur les surépaisseurs 253a du flasque mobile 253. Ainsi une liaison rigide est établie entre le flasque mobile 253 et la coupelle 255 et donc l'armature 254 du dossier qui est rendue solidaire de la coupelle 255 par des moyens convenables (boulons et écrous, rivets ou soudure).

De plus, l'arbre central 265, autour duquel pivotent les différents éléments de l'articulation, porte un manchon 166 monté fou sur l'arbre 265 et qui est solidaire d'une came 267 dont les extrémités 267a-267b permettent, lors de la rotation du manchon 266 sous l'action du levier 270 fixé sur le manchon 266, de dégager les surépaisseurs 253a des alvéoles 262-263 prévues dans les verrous 258-259 en permettant ainsi la rotation libre de la coupelle 255 et donc obligatoirement l'abaissement du dossier sur l'assise puisque la coupelle 255 est solidaire de l'armature 254 du dossier.

Bien entendu, le levier 270 est soumis à l'action d'une commande 280 qui peut être manuelle ou actionnée par un moteur alimenté par exemple lors de l'ouverture d'une portière, car on peut prévoir un verrouillage impératif de cette commande lorsque les portières sont fermées.

Le dispositif est monté évidemment de chaque côté du siège afin d'assurer une bonne stabilité du dossier.

## Revendications

1. Articulation ronde utilisable pour les sièges de véhicules comprenant un flasque mobile cylindrique (9) portant des organes de fixation permettant l'accrochage aisé de l'armature du dossier et un flasque cylindrique fixe (1) comportant également des organes de fixation permettant l'accrochage aisé de l'armature de l'assise du siège sur l'articulation, le flasque mobile (9) et le flasque fixe (1) contenant en leur centre chacun une ouverture (3), l'ouverture du flasque fixe recevant une pièce majeure (2) portant une came (4) sur laquelle est monté un satellite double (5) ayant une denture intérieure (5a) et une denture extérieure (5b), caractérisée en ce que:

a) les dentures intérieure (5a) et extérieure (5b) du satellite double (5) coopèrent l'une avec la denture extérieure (8) du flasque fixe (1) et l'autre avec la denture extérieure (9a) du flasque mobile (9);

b) une découpe circulaire (1b) du flasque fixe (1) formant bossage circulaire (6) sert à la fois de chemin de centrage au satellite double (5) et à une bague ovoïde (13);

c) un roulement à billes (12) est interposé entre le flasque mobile (9) et une couronne (11) sertie entre le flasque mobile (9) et le flasque fixe (1);

d) des roulements à billes (15, 16) sont interposés entre le bossage circulaire (6), la bague centrale ovoïde (13) et un roulement à aiguilles (14) servant d'organe de repos au satellite double (5) par rapport à la came (4);

e) la pièce majeure centrale (2) comporte en son centre un évidement de forme circulaire (3) constituant un palier lisse destiné à recevoir l'arbre de l'organe de commande du mécanisme des articulations du siège considéré.

2. Articulation ronde suivant la revendication 1, caractérisée en ce que la bague ovoïde (13) est disposée entre le flasque mobile (36) et le satellite double (34) avec interposition entre le flasque fixe (30) et la périphérie extérieure du satellite double (34) de roulements à billes (43, 44).

3. Articulation ronde suivant l'une des revendications 1 ou 2, caractérisée en ce que la pièce majeure (2) portant la came (4) est montée sur des paliers lisses lorsque le mécanisme de l'articulation est irréversible ou sur des paliers à billes, à aiguilles ou à rouleaux lorsque le mécanisme d'articulation est réversible.

4. Articulation utilisable pour les sièges de véhicules comprenant un flasque mobile cylindrique (200) présentant un évidement (220a) et un flasque cylindrique fixe (206) présentant également un évidement central (206a) constituant un espace avec l'évidement (200a) pour contenir un satellite double (213) dont les dentures (214, 215) coopèrent l'une avec la denture externe (201b) du flasque mobile (200) et l'autre avec la denture interne (212) du flasque fixe (206), ces flasques mobile et fixe comportant des organes de fixation permettant l'accrochage aisé de l'armature de l'assise du siège et de l'armature du dossier, caractérisée en ce que:

a) le flasque mobile (200) présente un dégagement circulaire (200b) contenant un roulement à billes (208) logé dans une couronne (207) maintenant la périphérie extérieure du flasque fixe (206);

b) le satellite (213) repose sur une couronne excentrée (216) et sur une pièce circulaire (224) maintenue par des roulements à billes (222, 223) puis la couronne excentrée (216) comporte deux logements (217, 218) disposés à 120° l'un de l'autre pour obtenir des grains (219, 220) venant porter sur la face interne du satellite (213) lorsque l'axe central (230) de l'articulation est en position normale du fait que cet axe présente une collerette tronconique (232) repoussant les grains (219, 220) contre la face interne du satellite (213) pour bloquer ce dernier.

5. Articulation ronde suivant la revendication 4, caractérisée en ce que l'axe (230) portant la collerette tronconique (232) est soumis à l'action d'un ressort tendant à rappeler cet axe à sa position de repos dans laquelle la collerette repousse les grains (219, 220) contre la périphérie inférieure du satellite (213) tandis que, lorsque l'axe (230) est repoussé contre l'action du ressort précité, les grains (219, 220) sont libres et permettent ainsi la rotation du satellite (213) pour régler l'inclinaison du dossier par rapport à l'assise du siège considéré.

6. Articulation ronde suivant les revendications 4 et 5, caractérisée en ce que la périphérie extérieure (219b-220b) des grains (219-220) est lisse.

7. Articulation suivant les revendications 4 et 5, caractérisée en ce que la périphérie extérieure (219b-220b) des grains (219-220) est dentée.

8. Articulation suivant l'une des revendications 1 à 7, caractérisée en ce qu'une coupelle (255), entourant librement toute la périphérie extérieure du mécanisme de l'articulation, porte sur son flanc extérieur l'armature du dossier tandis que sur son flanc intérieur elle porte des axes (260-261) permettant l'articulation de verrous (258-259) présentant chacun des alvéoles (262-263) s'accrochant sur les surépaisseurs (253a) du flasque mobile (253) de l'articulation, ces verrous pouvant être dégagés au moyen d'une came double (267) solidaire d'un manchon (266) monté fou sur l'arbre central (265) du mécanisme d'articulation, le mouvement de la came étant obtenu au moyen d'un levier (270) solidaire de la came (267) et dont le mouvement est commandé par un organe manuel ou par un moteur.

**Patentansprüche**

1. Rundes Gelenk für Fahrzeugsitze mit einer beweglichen zylindrischen Wange (9), die Befestigungselemente zur bequemen Befestigung der Armatur der Sitzlehne trägt, und einer ortsfesten zylindrischen Wange (1), die ebenfalls Befestigungselemente zur bequemen Befestigung der Armatur der Sitzlehne-Basis am Gelenk trägt, wobei die bewegliche Wange (9) und die ortsfeste Wange (1) jeweils in ihrer Mitte eine Öffnung (3) aufweisen und die Öffnung der ortsfesten Wange einen Hauptteil (2) aufnimmt, der eine Nocke (4) trägt, auf welcher ein mit einer Innenverzahnung (5a) und einer Aussenverzahnung (5b) versehener Doppel-Satellit (5) angeordnet ist, dadurch gekennzeichnet, dass
a) die innere Verzahnung (5a) und die äussere Verzahnung (5b) des Doppel-Satellits (5) jeweils mit der äusseren Verzahnung (8) der ortsfesten Wange (1) und der äusseren Verzahnung (9a) der beweglichen Wange (9) zusammenwirken;
b) ein kreisförmiger Ausschnitt (1b) der ortsfesten Wange (1), der eine kreisförmige Erhöhung (6) bildet, gleichzeitig als Zentrierungsweg für den Doppel-Satellit (5) und einen eierförmigen Ring (13) dient;
c) ein Kugellager (12) zwischen der beweglichen Wange (9) und einem zwischen der beweglichen Wange (9) und der ortsfesten Wange (1) eingefassten Kranz (11) angeordnet ist;
d) einige Kugellager (15, 16) zwischen der kreisförmigen Erhebung (6), dem eierförmigen zentralen Ring (13) und einem als Rastelement bezüglich der Nocken (4) für den Doppel-Satellit (5) dienenden Nadellager (14) angeordnet sind;
e) der zentrale Hauptteil (2) in seiner Mitte eine kreisförmige Aussparung (3) aufweist, die ein Gleitlager darstellt, das dazu bestimmt ist, die Welle des Antriebsorgans des Mechanismus für die Sitz-Gelenke aufzunehmen.

2. Rundes Gelenk nach Anspruch 1, dadurch gekennzeichnet, dass der eierformige Ring (13) zwischen der beweglichen Wange (36) und dem Doppel-Satellit (34) unter Zwischenschaltung von Kugellagern (43, 44) zwischen die ortsfeste Wange (30) und den Aussenumfang des Doppel-Satellits (34) angeordnet ist.

3. Rundes Gelenk nach einem der Ansprüche 1 oder 2, dadurch gekennzeichnet, dass der Hauptteil (2), der die Nocke (4) trägt, auf Gleitlagern gelagert ist, wenn der Gelenk-Mechanismus irreversibel ist, und auf Kugel-, Nadel- oder Rollenlagern gelagert ist, wenn der Gelenk-Mechanismus reversibel ist.

4. Gelenk für Fahrzeugsitze mit einer zylindrischen beweglichen Wange (200), die eine Ausnehmung (200a) aufweist, und einer zylindrischen ortsfesten Wange (206), die ebenfalls eine zentrale Ausnehmung (206a) aufweist, die gemeinsam mit der Ausnehmung (200a) einen Raum zur Aufnahme eines Doppel-Satelliten (213) begrenzt, dessen Verzahnungen (214, 215) jeweils mit der äusserlichen Verzahnung (201b) der beweglichen Wange (200) und mit der inneren Verzahnung (212) der ortsfesten Wange (206) zusammenwirken, wobei diese bewegliche und ortsfeste Wangen Befestigungselemente zur bequemen Befestigung der Armatur der Sitzbasis und der Sitzlehnarmatur aufweisen, dadurch gekennzeichnet, dass
a) die bewegliche Wange (200) eine kreisförmige Ausnehmung (200b) aufweist, die ein Kugellager (208) aufnimmt, das den Aussenumfang der ortsfesten Wange (206) festhaltenden Kranz (207) enthält,
b) der Satellit (213) über auf einem aussermittigen Kranz (216) und auf einem kreisförmigen Teil (224) abstützt, der durch Kugellager (222, 223) festgehalten wird, und der aussermittige Kranz (216) zwei Ausnehmungen (217, 218) aufweist, die um 120° gegeneinander versetzt angeordnet sind, damit Körner (219, 220) die Innenseite des Satellits (213) berühren, wenn sich die Zentralachse (230) des Gelenks in normaler Stellung befindet, weil diese Achse einen kegelstumpfförmigen Kragen (232) aufweist, der die Körner (219, 220) gegen die Innenseite des Satellits (213) drückt, um den letzteren zu blockieren.

5. Rundes Gelenk nach Anspruch 4, dadurch gekennzeichnet, dass die den kegelstumpfförmigen Kragen (232) tragende Achse (230) der Kraft einer Feder ausgesetzt ist, die das Bestreben hat, diese Achse in ihre Ruhestellung zurückzuführen, in welcher der Kragen die Körner (219, 220) gegen den unteren Aussenumfang des Satellits (213) drückt, während die Körner (219, 220) freigelegt werden, wenn die Achse (230) entgegen der Kraft der Feder zurückgedrückt wird, so dass sich der Satellit (213) drehen kann, um die Neigung der Sitzlehne in bezug auf die Sitzbasis einzustellen.

6. Rundes Gelenk nach den Ansprüchen 4 und 5, dadurch gekennzeichnet, dass die äusserlich Umfangfläche (219b, 220b) der Körner (219, 220) glatt ist.

7. Rundes Gelenk nach den Ansprüchen 4 und 5, dadurch gekennzeichnet, dass die äusserliche Umfangfläche (219b, 220b) der Körner (219, 220) eine Verzahnung aufweist.

8. Rundes Gelenk nach einem der Ansprüche 1 bis 7, dadurch gekennzeichnet, dass eine Schale (255), die den ganzen äusserlichen Umfang des Gelenk-Mechanismus frei umgibt, auf ihrer äusserlichen Seite die Sitzlehne-Armatur trägt, während sie auf ihrer inneren Seite Achsen (260, 261) trägt, an welche sich Riegel (258, 259) anlenken, die jeweils Ausnehmungen (262, 263) aufweisen, in welche die Erhebungen (253a) der beweglichen Wange (253) des Gelenks eingreifen, wobei diese Riegel durch eine Doppel-Nocke (267) freigelegt werden können, die mit einer loser, auf der zentralen Welle (265) des Gelenk-Mechanismus angordneten Muffe (266) festgebunden ist, wobei die Bewegung der Nocke mittels eines mit der Nocke (267) festgebundenen Hebels (270) erzeugt wird, dessen Bewegung mit der Hand oder durch einen Motor gesteuert wird.

## Claims

1. Round hinged-part for use in vehicle seats comprising a cylindrical movable flange (9) carrying fixing members enabling the easy hooking of the back frame and a fixed cylindrical flange (1) comprising also fixing members enabling the easy hooking of the seating frame on the hinged-part, the movable flange (9) and the fixed flange (1) each containing in their center an aperture (3), the aperture of the fixed flange receiving a main part (2) carrying a cam (4) on which is mounted a double satellite (5) having an inner tooth set (5a) and an outer tooth set (5b), characterized in that:

a) the inner (5a) and outer (5b) tooth sets of the double satellite (5) cooperate one with the outer tooth set (8) of the fixed flange (1) and the other with the outer tooth set (9a) of the movable flange (9);

b) a circular cut-off part (1b) of the fixed flange (1) forming a circular boss (6) is used both as a centering path for the double satellite (5) and for an avoid ring (13);

c) a ball-bearing (12) is interposed between the movable flange (9) and a rim (11) crimped between the movable flange (9) and the fixed flange (1);

d) ball-bearing (15, 16) are interposed between the circular boss (6), the central ovoid ring (13) and a needle bearing (14) serving as a resting means for the double satellite (5) relatively to the cam (4);

e) the central main part (2) comprises in its center a circular shaped recess (3) constituting a smooth bearing provided to receive the shaft of the control member of the mechanism of the hinged-parts of the considered seat.

2. Round hinged-part according to claim 1, characterized in that the ovoid ring (13) is placed between the movable flange (36) and the double satellite (34) with interposition of ball-bearings (43, 44) between the fixed flange (30) and the outer periphery of the double satellite (34).

3. Round hinged-part according to one of claims 1 or 2, characterized in that the main piece (2) carrying the cam (4) is mounted on smooth bearings when the mechanism of the hinged-part is irreversible, or on ball-, needle- or roller-bearings when the mechanism is reversible.

4. Hinged-part for use in vehicle seats comprising a movable cylindrical flange (200) provided with a recess (200a) and a fixed cylindrical flange (206) having also a central recess (206a) constituting a gap with the recess (200a) for containing a double satellite (213) whose tooth sets (214, 215) cooperate, one with the outer tooth set (201b) of the movable flange (200) and the other with the inner tooth set (212) of the fixed flange (206), these movable and fixed flanges comprising fixing members enabling the easy hooking of the seating frame and back frame, characterized in that:

a) the movable flange (200) has a circular recess (200b) containing a ball-bearing (208) housed in a rim (207) maintaining the outer periphery of the fixed flange (206);

b) the satellite (213) bears upon an encentric rim (216) and a circular piece (224) held by ball-bearings (222, 223) then the eccentric rim (216) comprises two housings (217, 218) placed at 120° from one another in order to obtain bearing plates (219, 220) which are supported on the inner side of the satellite (213) when the central spindle (230) of the hinged-part is in a normal position due to the fact that this spindle has a tapered collar (232) pushing the bearing plates (219, 220) back against the inner side of the satellite (213) in order to block the same.

5. Round hinged, part according to claim 4, characterized in that the spindle (230) carrying the tapered collar (232) is submitted to action of a spring tending to make this spindle to return to its rest position in which the collar pushes the bearing plates (219, 220) back against the lower periphery of the satellite (213) while, when the spindle (230) is pushed back against the action of the above mentioned spring, the bearing plates (219, 220) are free and thus permit the rotation of the satellite (213) to adjust the inclination of the back relatively to the seating of the considered seat.

6. Round hinged-part according claims 4 and 5, characterized in that the outer periphery (219*b*-220*b*) of the bearing plates (219-220) is smooth.

7. Hinged-part according to claims 4 and 5, characterized in that the outer periphery (219*b*-220*b*) of the bearing plates (219-220) is toothed.

8. Hinged-part according to one of claims 1 to 7, characterized in that a small cup (255), freely surrounding all the outer periphery of the mechanism of the hinged-part, carries on its outer side the back frame while, on its inner side, it carries spindles (260-261) enabling the articulation of locks (258-259) each having cavities (262-263) hooking into the overthicknesses (253*a*) of the movable flange (253) of the hinged-part, these locks being disengageable by means of a double cam (267) fixed with a sleeve (266) mounted loose on the central shaft (265) of the mechanism of the hinged-part, the motion of the cam being obtained by means of a lever (270) fixed with the cam (267) and whose motion is controlled by a manual member or a motor.

*Fig.1*

II

11
1a
12
19 1b
6
5a
9a
15
5
1
16
14
2
3
14
4
9
19 13
8
5b
5a
9a
12

II

*Fig.2*

11
1
13
4
15
14

*Fig.3*

IV

40
41
43
34a
31
30
32
36
36a
34
34c
35
33
34b
36a
44

IV

*Fig.4*

44
41
43
42
40
33
32

0 159 926

Fig:5

Fig:6

Fig:7

Fig:8

Fig:9

Fig:10

Fig:11

Fig:12

13

0 159 926

Fig:13

Fig:14

Fig:15

Fig:16

Fig:17

Fig:18

Fig:19

Fig:20

Fig:21

15

Fig.23

Fig.22

Fig. 24

Fig. 25

0 159 926

FIG. 27

FIG. 26

0 159 926